Europäisches Patentamt

European Patent Office

Office européen des brevets

(11) Veröffentlichungsnummer : **0 448 665 B1**

(12) **EUROPÄISCHE PATENTSCHRIFT**

(45) Veröffentlichungstag der Patentschrift :
03.05.95 Patentblatt 95/18

(21) Anmeldenummer : 90914499.0

(22) Anmeldetag : 05.10.90

(86) Internationale Anmeldenummer :
PCT/CH90/00237

(87) Internationale Veröffentlichungsnummer :
WO 91/06164 02.05.91 Gazette 91/10

(51) Int. Cl.⁶ : **H04J 13/00,** H04B 7/26,
H04K 1/00

(54) DIGITALER EMPFÄNGER FÜR BANDSPREIZSIGNALE.

(30) Priorität : 19.10.89 CH 3811/89

(43) Veröffentlichungstag der Anmeldung :
02.10.91 Patentblatt 91/40

(45) Bekanntmachung des Hinweises auf die
Patenterteilung :
03.05.95 Patentblatt 95/18

(84) Benannte Vertragsstaaten :
AT BE DE DK ES FR GB IT LU NL SE

(56) Entgegenhaltungen :
DE-A- 3 735 374
US-A- 4 611 333
US-A- 4 813 006

(73) Patentinhaber : **ASCOM TECH AG**
Berner Technopark
Morgenstrasse 129
CH-3018 Bern (CH)

(72) Erfinder : **KAUFMANN, Hans**
Chapfstrasse 17
CH-8625 Gossau (CH)

(74) Vertreter : **Schwerdtel, Eberhard, Dr.**
Ascom Tech AG
Gewerblicher Rechtsschutz
Berner Technopark
Morgenstrasse 129
CH-3018 Bern (CH)

**Beschreibung**

Die Erfindung betrifft ein Verfahren zum Ermitteln der Daten von Bandspreizsignalen, die durch Multiplikation eines nachrichtentragenden Signals mit einer Hilfsfunktion erzeugt sind, entsprechend dem Oberbegriff von Anspruch 1. Die Erfindung betrifft weiter einen Empfänger entsprechend dem zweiten unabhängigen Anspruch.

In der Schrift EP-A-0 361 299 ist ein digitales Funkübertragungssystem unter Verwendung der Bandspreiztechnik beschrieben, bei dem digitale Signalverarbeitung angewendet wird. Die Korrelatoren der Empfänger sind dabei mit analogen Bauteilen diskret aufgebaut und somit bezüglich Platz- und Strombedarf relativ aufwendig. Weiter weisen die analogen Bauteile bekannte Drift- und Alterungsprobleme auf und beschränken die Anwendungsmöglichkeiten der digitalen Signalverarbeitung.

Die Schrift DE-A-3 735 374 beschreibt eine digitale Korrelatorschaltung, die als integrierter Halbleiterbaustein herstellbar ist. Ihr Einsatz ist vorgesehen für ein nichtkohärentes digitales Matched-Filter bzw. einen Quadraturdemodulator. Bei letzterem werden durch einen Oszillator, einen Phasenschieber, Mischstufen und Tiefpassfilter Quadraturkomponenten I(t) , Q(t) eines Eingangssignals erzeugt. Die Quadraturkomponenten werden dann mit einer vorgegebenen Abtastrate abgetastet und digitalisiert. Vier nachfolgende, digitale Korrelatorschaltungen sowie zugeordnete Summierer und Addierer bilden ein nachgeschaltetes digitales Vierphasen-Matched-Filter, das die gefilterten Signale für eine Weiterverarbeitung bereitstellt.

Ausgehend von dieser Schrift ist es die Aufgabe der Erfindung, einen Empfänger für Bandspreizsignale anzugeben, dessen Korrelatoren kompakt ausgebildet und sparsam im Stromverbrauch sind sowie keine Drift- und Alterungsprobleme aufweisen. Dieser Empfänger soll bevorzugt als Halbleiterbaustein integrierbar sein.

Die Lösung dieser Aufgabe wird durch die unabhängigen Ansprüche gegeben. Die abhängigen Ansprüche geben Ausgestaltungen der Erfindung an.

Der in der Erfindung verwendete Korrelator ist monolithisch integrierbar, platz- und stromsparend sowie einfach einsetzbar. Ein mit derartigen Korrelatoren ausgerüsteter Empfänger weist kaum Drift- und Alterungsprobleme auf und ist ausserordentlich flexibel. Ein solcher Empfänger eignet sich damit besonders für Funkübertragungssysteme mit Mehrwegausbreitung. Er ermöglicht aber auch eine Mehrfachausnützung des Übertragungskanals durch Mehrfachzugriff (Code Division Multiple Access = CDMA). Der Einsatz erfolgt daher mit Vorteil bei Funksystemen mit Mikrozellenanordnung in lokal begrenzten Bereichen wie Fabrikarealen, Häusern oder Stockwerken.

Im folgenden wird die Erfindung anhand eines Ausführungsbeispiels und der Zeichnungen näher erläutert; es zeigen:

Fig. 1        ein Blockschaltbild eines digitalen Mehrwegempfängers für Bandspreizsignale,

Fig. 2        ein Blockschaltbild des Korrelators des Empfängers von Fig. 1; und

Fig. 3,4      Diagramme zur Funktionserläuterung.

Der erfindungsgemässe Mehrwegempfänger ist ein digitaler Empfänger für Bandspreizsignale nach der sogenannten Direct Sequence Methode und er eignet sich besonders für Funkübertragungssysteme auf Kanälen mit Mehrwegausbreitung. Ein System dieser Art ist in der EP-A-0 361 299 der Ascom Zelcom AG beschrieben, auf deren Offenbarung hiermit ausdrücklich Bezug genommen wird. Der nachfolgend beschriebene digitale Empfänger stellt eine Verbesserung des in dieser Patentanmeldung beschriebenen Korrelationsempfängers dar, wobei die Verbesserung in erster Linie die verwendeten Korrelatoren des Empfängers betrifft, indem nun digitale Korrelatoren vorgeschlagen werden.

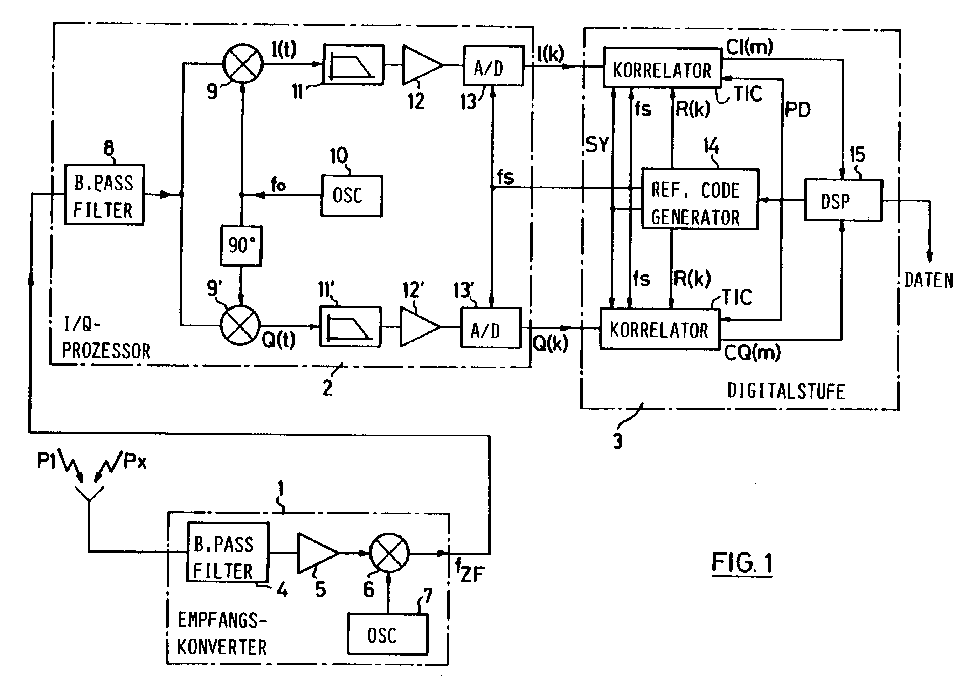

Fig. 1 zeigt ein Blockschema eines digitalen Mehrwegempfängers, welcher darstellungsgemäss aus drei Blöcken, einem Empfangskonverter 1, einem sogenannten I/Q-Prozessor 2 und aus einer Digitalstufe 3 besteht. Im Empfangskonverter 1 wird das über Pfade PI bis Px zur Antenne des Empfängers gelangende, breitbandige Empfangssignal in einem Bandpassfilter 4 gefiltert, um Signale ausserhalb des verwendeten Frequenzbandes zu unterdrücken. Das Ausgangssignal des Bandpassfilters 4 wird in einem Verstärker 5 verstärkt und in einem Mischer 6, an dessen anderem Eingang ein Lokaloszillator 7 liegt, auf eine Zwischenfrequenz $f_{ZF}$ gemischt. Dieses ZF-Signal gelangt nun in den I/Q-Prozessor 2, wo es in einem weiteren Bandpassfilter 8 gefiltert und anschliessend durch Multiplikation (Mischer 9, 9′) mit einem Cosinus- beziehungsweise Sinussignal der Frequenz fo aus einem Lokaloszillator 10 ins Basisband gemischt wird. Dadurch entstehen zwei resultierende Signale I(t) und Q(t), welche durch Tiefpassfilter 11, 11′ von hochfrequenten Signalanteilen befreit und in Verstärkern 12, 12′ verstärkt werden. Anschliessend werden die beiden Signale in Analog-Digitalwandlern 13, 13′ mit einer Abtastrate von fs = c/Tc quantisiert und als digitale Werte I(k) und Q(k) durch b Bits dargestellt, wobei b beispielsweise gleich 8 ist.

In der Formel für die Abtastrate fs bezeichnet c die Anzahl der Abtastwerte pro Codeelement (= Chip) und Tc die Dauer eines Chips. Diese Dauer entspricht der kleinsten Rechteck-Impulsdauer der zur Bandspreizung verwendeten Hilfsfunktion, deren Verlauf ja bei Bandspreizsystemen im Empfänger bekannt ist und welche im Empfänger durch den Referenzcode gebildet wird.

Der dritte Block des Empfängers, die Digitalstufe 3, welche ausschliesslich digital arbeitet, besteht im wesentlichen aus Korrelatoren TIC, aus einem Referenzcode-Generator 14 und aus einem digitalen Signalprozessor 15. Die Zahlenfolgen I(k) und Q(k) werden in je einen Korrelator TIC eingelesen und dort mit dem Referenzcode R(k) korreliert. Die Korrelationsresultate CI(m) und CQ(m) werden vom digitalen Signalprozessor 15 gelesen und weiterverarbeitet. Dieser leitet daraus Regelsignale PD für die Steuerung des Referenzcode-Generators 14 und der Korrelatoren TIC ab, berechnet die Abweichung zwischen der Trägerfrequenz $f_{ZF}$ und der Lokaloszillatorfrequenz fo und führt die kohärente Demodulation des übermittelten Informationsbits durch. Der Referenzcode-Generator 14 liefert an die Korrelatoren TIC den Referenzcode R(k), die Abtastrate fs und ein Synchronisierungssignal SY und an die Analog-Digitalwandler 13, 13' die Abtastrate fs.

Die Anforderungen an digitale Korrelatoren werden durch die Parameter des Inhouse-Funkübertragungssystems bestimmt. Aus der Kohärenzbandbreite des Uebertragungskanals lässt sich eine Taktrate (Chiprate) für die pseudozufällige Hilfsfunktion im Bereich von 10 bis 30 MHz ableiten. Um in einem Zellularsystem mit Mehrfachzugriff (CDMA) eine genügend grosse Anzahl von Benützern zulassen zu können, werden Spreizfaktoren von mindestens 255 bis etwa 4000 benötigt. Da in einem digitalen Korrelationsempfänger auch die Synchronisation des lokalen Referenzcodes auf den empfangenen Code digital erfolgen soll und dabei jedes Chip mindestens zweimal abgetastet werden muss, ergeben sich für den Korrelator Abtast- und Verarbeitungsraten von 20 bis 60 MHz.

Da sich aufgrund von Mehrwegausbreitung und Mehrfachbelegung des Kanals durch CDMA am Empfangsort mehrere Signale überlagern, besitzt das Signal am Empfängereingang keine konstante Signalenveloppe mehr und muss daher vor dem Korrelator mit mehreren Bits Auflösung amplitudenquantisiert werden. Erfolgt dies nicht, dann entstehen untolerierbare Verluste. Der Referenzcode kann hingegen als binäres Signal vorliegen.

Eine diese Anforderungen erfüllender digitaler Korrelator kann als programmierbares Transversalfilter oder als zeit-integrierender Korrelator realisiert werden. Eine Realisierung als programmierbares Transversalfilter ist aus der Publikation "Digital SOS-MOS Correlator: Basic System Component in Experimental Army Spread Spectrum Radio" von N.A. Saethermoen, B. Skeie und S. Prytz in 2nd Int. Conf. on the Impact of High Speed and VLSI Technology on Comm. Systems, London 1983, bekannt. Diese Realisierung ist jedoch überaus aufwendig, da bei 2 Abtastwerten pro Codechip pro Signalbit mindestens 2.L Speicherzellen für Referenzcode und Signal und 2.L Multiplikatoren benötigt werden (L=Codelänge). Die Datenrate des Korrelationsresultats ist dieselbe wie die Abtastrate des Eingangssignals und daher sehr hoch. Dies ermöglicht zwar eine schnelle Synchronisation, ist aber für die weitere digitale Signalverarbeitung ungünstig.

Im Unterschied zum programmierbaren Transversalfilter wird in einem zeit-integrierenden Korrelator die Ausgangsdatenrate gegenüber der Abtastrate am Eingang um die Anzahl der summierten Korrelationsprodukte reduziert. Bei Integration über eine ganze Codeperiode fallen die Korrelationsresultate nur noch mit der Informationsbitrate an, was eine Reduktion der Abtastrate des Eingangssignals um das Produkt c.L bedeutet (c=Anzahl Abtastwerte pro Codechip). Diese reduzierte Datenrate kann nun in einem digitalen Signalprozessor leicht weiterverarbeitet werden.

Aus der Literatur sind Realisierungen von zeit-integrierenden Korrelatoren in CCD-Technologie (CCD: Charge Coupled Device = ladungsgekoppeltes Bauelement) bekannt (B.E. Burke, D.L. Smythe: "A CCD Time-Integrating Correlator", IEEE J. of Solid State Circuits, SC-18, Dec. 1983) und als akusto-optische Bauelemente (F.B. Rotz: "Time-Integrating Optical Correlator", Proc SPIE, Vol. 202, 1979). Da einerseits die CCD-Lösung auf Taktraten von maximal 20 MHz begrenzt ist und einen durch Offset-Spannungen und Taktübersprechen eingeschränkten Dynamikbereich aufweist, und andererseits die akusto-optische Lösung nicht monolithisch aufgebaut werden kann und ausserdem kompliziert und teuer ist, sind diese bekannten Realisierungen für den digitalen Mehrwegempfänger von Fig. 1 nicht geeignet.

Der digitale Korrelator TIC ist zwar ein zeit-integrierender Koorelator, er ist aber weder ein ladungsgekoppeltes noch ein akusto-optisches Bauelement, sondern er ist in seiner Architektur speziell an die Bedürfnisse eines Mehrweg-Empfängers nach dem Scannerprinzip angepasst. Die dafür gefundene, nachfolgend beschriebene Lösung ist monolithisch integrierbar und deshalb einfach einzusetzen und sie ist platz- und stromsparend. Die programmierbaren Funktionen des zeit-integrierenden Korrelators TIC sowie die Auswertung der Korrelationsresultate im digitalen Signalprozessor 15 ermöglichen den Aufbau eines sehr flexiblen Spread-Spectrum-Empfängers.

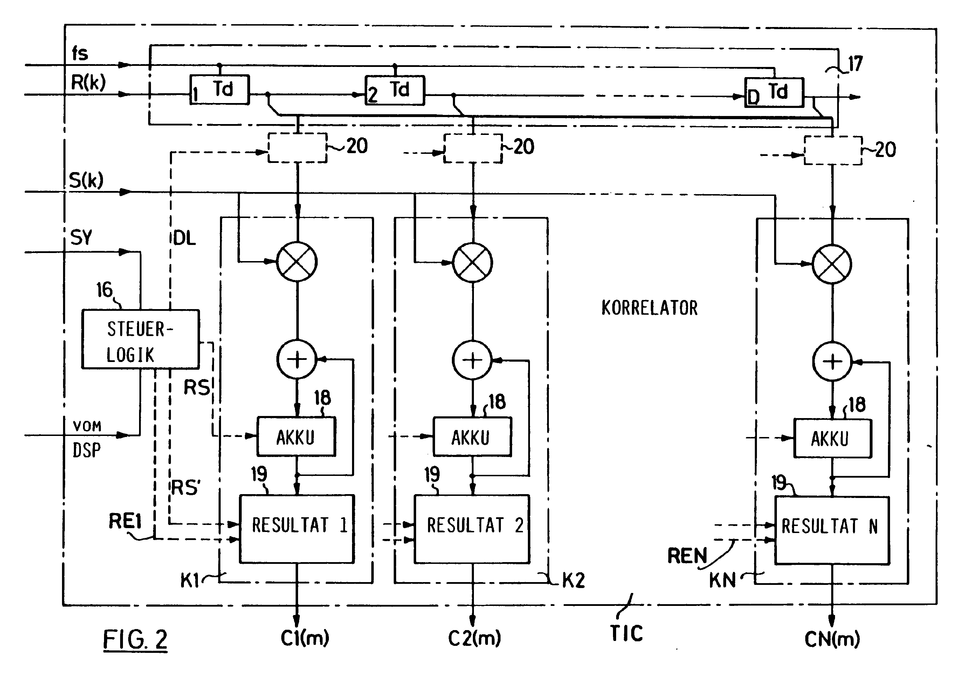

Fig. 2 zeigt ein Blockschema der im Empfänger von Fig. 1 verwendeten zeit-integrierednen Korrelatoren TIC. Die in Fig. 1 mit I(k) und Q(k) bezeichneten Zahlenfolgen vom I/Q-Prozessor 2 sind hier allgemein und stellvertretend für beide Zahlenfolgen mit S(k) bezeichnet. Darstellungsgemäss besteht der Korrelator aus N Korrelatorstufen Kn, aus einer Steuerlogik 16 und aus einer digitalen Verzögerungsleitung 17, an welche die Korrelatorstufen parallel angeschaltet sind.

Die Architektur des zeit-integrierenden Korrelators ist an die zu erwartende Impulsantwort des Uebertragungskanals angepasst. Diese Impulsantwort ist, wie Messungen gezeigt haben, bedeutend kürzer als die Datenbitdauer, so dass nur während eines kurzen Teils der Codelänge signifikante Korrelationswerte entstehen. Es genügt daher, im synchronisierten Zustand nur einen kleinen Ausschnitt des ganzen Codes mit dem Empfangssignal zu korrelieren. Zu diesem Zweck wird der vom Referenzcode-Generator 14 (Fig. 1) gelieferte binäre Referenzcode R(k) in die digitale Verzögerungsleitung 17 eingespeist, welche eine bestimmte Länge D, im vorliegenden Fall D=32, aufweist, und die mit dem Takt fs, beispielsweise fs=2/Tc, betrieben wird. Der eingespeiste Referenzcode erfährt zwischen den Anschlüssen zweier aufeinanderfolgender Korrelatorstufen Kn jeweils eine Verzögerung um die Zeit Td, wobei vorzugsweise Td=Tc/2 ist. Die n-te Korrelatorstufe erhält also als Referenzsignal den um n.Td verzögerten Referenzcode. Das digitalisierte Ausgangssignal S(k) des I/Q-Prozessors 2 (Fig. 1) mit beispielsweise 8 Bit Auflösung wird parallel an alle Korrelatorstufen Kn gelegt.

Jede Korrelatorstufe Kn enthält darstellungsgemäss einen Akkumulator 18 und einen Resultatspeicher 19, welche beide von der Steuerlogik 16 gesteuert sind, und berechnet das Produkt aus S(k) und R(k-n). Diese Produkte werden summiert und im jeweiligen Akkumulator 18 über eine ganze Codelänge k (k=l...c mal L) gespeichert. Am Ende der Summation wird der Korrelationswert Cn(m) durch ein Steuersignal RS' der Steuerlogik 16 in den Resultatspeicher 19 übertragen, und anschliessend wird der Akkumulator 18 mit RS wieder auf Null gesezt. Jeder Resultatspeicher 19 liefert seinen Korrelationswert Cn(m) nach einem entsprechenden Steuersignal REn der Steuerlogik 16 an den digitalen Signalprozessor 15 (Fig. 1), der während der nächsten Summationsperiode die Resultate der vorangegangenen Korrelation weiterverarbeitet. Aufgrund des Signals REn (Read Enable) wird, gesteuert vom digitalen Signalprozessor, jeweils eine einzige Korrelatorstufe über einen Bus ausgelesen.

Der Aufbau des zeit-integrierenden Korrelators TIC kann durch eine Auswahlschaltung 20 weiter vereinfacht werden, welche für jede Korrelatorstufe Kn die Referenzsequenz mit einer vom digitalen Signalprozessor 15 programmierbaren Verzögerung durchschaltet. Diese Vereinfachung beruht auf folgender Ueberlegung: Die Länge D der Verzögerungsleitung 17 muss auf die maximal zu erwartende Länge der Kanalimpulsantwort angepasst sein, die im vorliegeden Fall etwa 1 Mikrosekunde beträgt. In der Praxis besteht aber diese Impulsantwort immer aus mehreren diskreten Signalteilen mit bestimmten Verzögerungen tp, so dass also nur diese diskreten Signalteile korreliert zu werden brauchen. Zu diesem Zweck werden nur an den Stellen tp, wo effektiv Signalteile vorhanden sind, Korrelatorstufen plaziert. Dadurch kann die Zahl N der Korrelatorstufen wesentlich geringer gehalten werden als die Länge D der Verzögerungsleitung 17. Beim vorliegenden Ausführungsbeispiel mit D=32 ist eine Anzahl von N=8 Korrelatorstufen noch ausreichend. Voraussetzung für diese Betriebsart ist eine freie Programmierbarkeit der Verzögerung jeder Korrelatorstufe. Die Programmierung erfolgt im digitalen Signalprozessor 15, der die Auswahlschaltung 20 via Steuerlogik 16 und eine Leitung DL entsprechend ansteuert, welche ihrerseits die Referenzsequenz mit der programmierten Verzögerung zur jeweiligen Korrelatorstufe durchschaltet.

Neben den schon erwähnten Vorteilen des digitalen Mehrweg-Empfängers besteht ein weiterer wesentlicher Vorteil darin, dass die wesentlichen Funktionen eines Spread-Spectrum Empfängers vollständig durch entsprechende Operationen im digitalen Signalprozessor ausgeführt werden können. Der Empfänger kann dabei durch die folgenden Zustände charakterisiert werden:

- Grobsynchronisation (Akquisition)
- Betrieb
- Neusynchronisation bei Verlust des Codesynchronismus.

Wie bereits erwähnt, beträgt die zeitliche Dauer der Impulsantwort des Uebertragungskanals nur einen Bruchteil der Datenbitdauer und damit der Codelänge L. Für die Akquisition werden nun die N Korrelatorstufen des zeit-integrierenden Korrelators so programmiert, dass sie jeweils um eine konstante Verzögerung e.Tc gegeneinander verschoben sind, wobei beispielsweise e = 1 gewählt wird. Durch Verschieben des empfangsseitigen Referenzcodes um jeweils N.e.Tc wird die ganze Codelänge sequentiell mit dem Empfangssignal korreliert. Die Akquisitionszeit Tacq beträgt dann Tacq=L.Tc.(L/N.e) im Vergleich zu L.Tc für einen Korrelator vom Typ eines programmierbaren Transversalfilters. Aus den dabei erhaltenen Korrelationswerten CI(m), CQ(m) lässt sich für jede Verzögerung die zugehörige Empfangsenergie E(m) berechnen:

$$E(m) = CI(m)^2 + CQ(m)^2$$

Nach dem Absuchen der gesamten Codelänge wird nun die Lage bestimmt, wo die maximale Empfangsenergie aufgetreten ist. Zur Bestätigung, ob wirklich das Energiemaximum gefunden wurde, wird untersucht, ob die Energie rund um dieses Maximum um einen bestimmten Betrag grösser ist als die über die ganze Codelänge gemittelte Rauschenergie. Ist dies der Fall, dann wird der Referenzcode-Generator 14 (Fig. 1) so programmiert, dass das Energiemaximum in der Mitte des durch den Korrelator abgedeckten Empfangsfensters liegt. Damit ist die Akquisition abgeschlossen und der Empfänger geht in den normalen Betriebszustand über; andernfalls wird die Akquisition wiederholt.

Der normale Betriebszustand umfasst folgende Funktionen: Ueberwachen der Kanalimpulsantwort (Scanning); Nachregeln der Phase des lokalen Referenzcode-Generators (Tracking); Schätzen der Trägerphase und kohärente oder differentielle Demodulation der Signale der einzelnen Empfangspfade; Ableiten der Gewichtungsfunktionen für die einzelnen Empfangspfade aus der Kanalimpulsantwort; Kombination der einzelnen Pfade und Detektion des übermittelten Datenbits. Wenn im Sender eine Fehlerschutzkodierung erfolgt ist, kann der Empfänger zusätzlich ein Qualitätskriterium für den nachfolgenden Fehlerdekodierer für die sogenannte Soft Decision liefern.

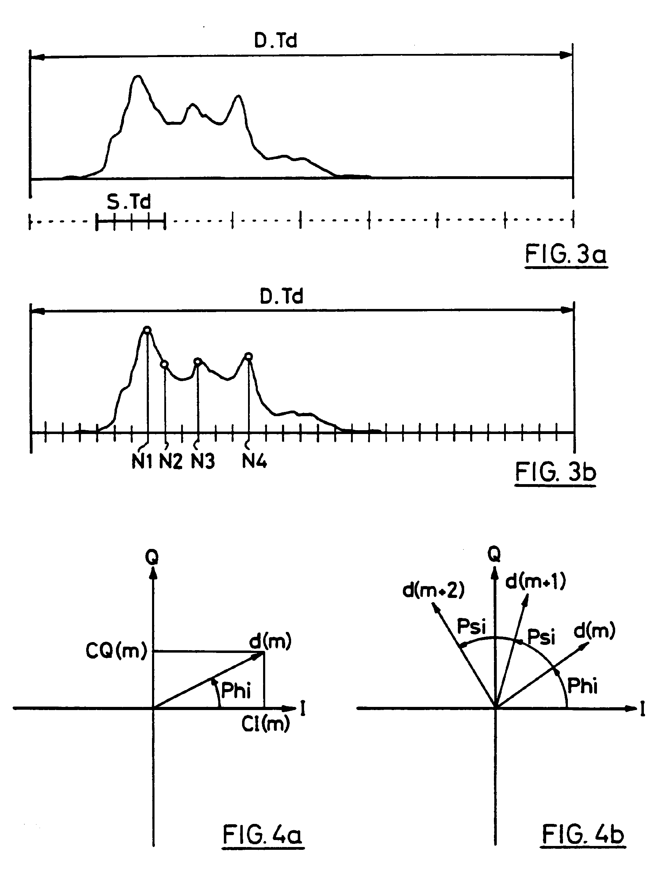

Die Vorteile eines Mehrweg-Empfängers kommen dann am besten zum Tragen, wenn eine gute Schätzung der Kanalimpulsantwort vorgenommen werden kann. Dies erfolgt beim vorliegenden Digitalen Empfänger durch den Scanning-Algorithmus, wofür S von den total N Korrelatorstufen des zeit-integrierenden Korrelators TIC verwendet werden. Die übrigen Korrelatorstufen (Anzahl = N-S) werden parallel dazu für die Datendemodulation benötigt. Mit den jeweils um Td gegeneinander verschobenen Scanner-Korrelationsstufen werden während einer Codeperiode L.Tc Korrelationswerte berechnet. Anschliessend werden die Korrelatorstufen um S.Td verschoben, und die Berechnung der Korrelationswerte wird für diese Position wiederholt. Nach ts=D/S Codeperioden ist das ganze Fenster abgesucht und der Scanvorgang beginnt von neuem. Diese Scanningfunktion ist in Fig. 3a dargestellt.

Wie Fig. 3b entnommen werden kann, werden die für die Demodulation benötigten Korrelatorstufen an die Stellen programmiert, wo die grösste Empfangsleistung zu erwarten ist. Diese Korrelationswerte CI(m) und CQ(m) können gemäss Fig. 4a als Koordinaten eines Datenvektors d(m) = (CI(m), CQ(m)) in der komplexen Ebene aufgefasst werden. Fig. 4a stellt also den Betrag der bei der Scanningfunktion gemessenen Kanalimpulsantwort anhand des empfangenen Datenvektors d(m) in der I/Q-Ebene dar.

Damit die Messungen der Kanalimpulsantwort beim Scanning aussagekräftig sind, muss die Scanzeit ts kleiner sein als die minimale Aenderungszeit des Uebertragungskanals. Je mehr Korrelatorstufen für das Scanning verwendet werden, umso schneller sich ändernde Kanäle kann man noch überwachen. Dafür stehen dann für die Datendemodulation entsprechend weniger Korrelatorstufen zur Verfügung. Für typische Inhouse-Kanäle sind beim beschriebenen System beispielsweise S=4 Scannerkanäle erforderlich. Da der zeit-integrierende Korrelator TIC vom digitalen Signalprozessor 15 (Fig. 1) programmierbar ist, kann die Aufteilung in Scanner- und Demodulatorkanäle auch adaptiv erfolgen.

Mit Hilfe der Korrelationswerte der Scannerkanäle wird überwacht, ob das Korrelationsfenster des zeit-integrierenden Korrelators TIC bezüglich des Empfangssignals richtig positioniert ist. Weil in der Regel die Kanalstossantwort kürzer ist als die Fensterbreite, kann aus den Werten ausserhalb der Impulsantwort eine Rauschleistung bestimmt werden. Wenn das Verhältnis der Leistung aller Empfangspfade zu dieser Rauschleistung eine vorbestimmte Schwelle unterschreitet, dann wird eine Neusynchronisation eingeleitet.

Die Feinsynchronisation (Tracking) des Referenzcodes kann so erfolgen, dass das. gewichtete Mittel der D Korrelationswerte, also deren Schwerpunkt, in die Mitte des Fensters des zeitintegrierenden Korrelators gelegt wird. Eine andere Methode besteht darin, den stärksten Empfangspfad jeweils an einer bestimmten Stelle, beispielsweise bei D.Td/3, zu positionieren.

Wie schon erwähnt wurde, können die Korrelationswerte CI(m) und CQ(m) der Scannerkanäle als Koordinaten eines Datenvektors d(m) = (CI(m), CQ(m)) in der komplexen Ebene aufgefasst werden (Fig. 4a). Der Winkel Phi zwischen dem Datenvektor und der reellen Achse entspricht dann der Phasenverschiebung zwischen dem Träger des Empfangssignals und dem Lokaloszillator. Wenn die Frequenzen des Empfangssignals und des Lokaloszillators übereinstimmen ($f_{ZF}$ =fo), dann wird der Winkel Phi im Mittel konstant bleiben und einen Mitelwert einnehmen und nur durch das Rauschen im Empfangssignal um diesen Mittelwert schwanken.

Für eine optimale Detektion wird durch Mittelung aus mehreren Empfangsvektoren der Einheitsvektor e=(x1, y1) berechnet, für den gilt:

$$y1/x1 = \tan(phi)$$
$$x1^2 + y1^2 = 1$$

Jeder empfangene Datenvektor d(m) wird mit dem konjugiert Komplexen des Vektors e multipliziert:

$$B(m) = Re(e * .d(m))$$

Aus dem Realteil des Produkts wird aus dem Vorzeichen von B(m) das gesendete Datenbit bestimmt; die Grösse des Produkts ist ein Mass für die Zuverlässigkeit der Entscheidung und kann als Qualitätsinformation an einen nachfolgenden Fehlerdekoder geliefert werden.

Wenn die Frequenzen von Empfangssignal und Lokaloszillator verschieden sind, werden aufeinanderfolgende Vektoren d(m) und d(m+1) gegeneinander gedreht sein (Fig. 4b). Diese Drehung Psi ist proportional zur Frequenzdifferenz df und zu Bitdauer Tb:

$$Psi = 2.Pi.df.Tb$$

In diesem Fall muss durch den Frequenzoffset neben der Anfangsphase Phi auch die Phasendrehung geschätzt werden. Daraus kann ein Referenzvektor r berechnet werden, der nun nicht mehr eine konstante Phase Phi besitzt, sondern mit der Winkelgeschwindigkeit 2.Pi.df rotiert:

$$r(m) = (x2, y2)$$

$$y2/x2 = \tan(Phi + 2.Pi.df.m.Tb)$$

Die Demodulation erfolgt analog wie vorher:

$$B(m) = Re(r(m) * .d(m))$$

Die Schätzung der Frequenzdifferenz df kann beispielsweise durch eine schnelle Fouriertransformation (FFT) über $2^M$ aufeinanderfolgende Datenvektoren d(m) erfolgen.

$$(m = 1....2^M, \text{zum Beispiel } m = 1....32).$$

In einem Mehrpfadempfänger besitzt in der Regel jeder Empfangspfad n wegen der unterschiedlich langen Ausbreitungswege eine andere Phasenverschiebung Phi gegenüber dem Lokaloszillator. Die Frequenzdifferenz df ist jedoch in Inhouse-Kanälen für alle Pfade nahezu gleich, da Dopplereffekt vernachlässigt werden können. Daher kann die Schätzung der Differenzfrequenz für alle Pfade gemeinsam erfolgen, wogegen die Phase für jeden Pfad einzeln berechnet werden muss. Eine einfache Lösung bietet hier die differentielle Demodulation zweier aufeinanderfolgender Datenvektoren d(m)-1) und d(m). Hier wird der erste Vektor d(m-1) um den Betrag Psi=2.Pi.df.Tb gedreht und dann als Referenz für die Demodulation des nächsten Datenvektors d(m) verwendet:

$$r(m) = d(m - 1).e^{j.Psi}$$

Der demodulierte Bitwert beträgt:

$$B(m) = Re(r(m) * .d(m))$$

Im Mehrpfadempfänger liegen die demodulierten Bitwerte B (m) von n Kanälen vor. Diese müssen geeignet kombiniert werden, um eine Entscheidung über das empfangene Bit fällen zu können. Dazu wird für jeden Empfangskanal als Gewicht der Erwartungswert der Signalamplitude $Gn= [(d_n (m).d_n (m)*)^{1/2}]$ berechnet. Die Bitwerte B (m) werden mit dem Quadrat von Gn multipliziert und die Produkte werden über alle n zu S(m) summiert. Das Vorzeichen von S(m) ergibt den Wert des detektierten Bits und der Betrag von S(m) ist ein Mass für die Stärke des Empfangssignals und daher auch für die Zuverlässigkeit dieser Entscheidung.

Bei Verlust der Codsynchronität im Betrieb wird eine Neusynchronisierung vorgenommen. Im Unterschied zur Akquisition wird aber dabei nicht die ganze Codelänge abgesucht, sondern es wird einer der aus der Literatur bekannten Suchalgorithmen angewandt, zum Beispiel diejenige nach der Literaturstelle "Performance Analysis for the Expanding Search PN Acquisition Algorithm" von W.R. Braun, IEEE Trans. Comm., COM-30, 1982.

Es werden also alle wesentlichen Funktionen des Mehrwegempfängers, insbesondere die Auswertung der Resultate der Korrelation, im digitalen Signalprozessor ausgeführt, was in Verbindung mit der Programmierbarkeit der Funktionen des zeit-integrierenden Korrelators dem beschriebenen Mehrwegempfänger eine beträchtliche Flexibilität verleiht. Ausserdem ermöglicht die Verwendung des zeit-integrierenden Korrelators der beschriebenen Architektur eine monolithisch integrierbare, einfach einsetzbare und platz- und stromsparende Lösung.

## Patentansprüche

1. Verfahren zum Ermitteln der Daten von Bandspreizsignalen, die durch Multiplikation eines nachrichtentragenden Signals mit einer Hilfsfunktion erzeugt sind,

   wobei mit einem Empfangskonverter (1) aus einem gefilterten Empfangssignal (P1, Px) ein Zwischenfrequenzsignal (ZF) gewonnen wird,

   wobei mit einem I/Q-Prozessor (2) aus dem Zwischenfrequenzsignal (ZF) und einem lokal erzeugten Cosinus- und Sinussignal durch Multiplizieren und anschliessendes Digitalisieren zwei Folgen digitaler Werte (I(k), Q(k)) gebildet werden, und

   wobei mit einer Digitalstufe (3) durch Korrelations- und weitere Prozesse aus den Folgen der digitalen Werte (I(k), Q(k)) die genannten Daten gewonnen werden,

   dadurch gekennzeichnet,

   - dass von einem Generator (14) ein Referenzcode (R(k)) erzeugt, in zwei Korrelatoren (TIC) durch zugehörige Verzögerungsleitungen (17) schrittweise verzögert und nach jedem Verzögerungsschritt dem ersten Eingang einer anderen von mehreren parallel betriebenen Korrelatorsstufen (K1, K2 ...KN) zugeführt wird,

   - dass jede Folge digitaler Werte (I(k), Q(k)) in einem der zwei Korrelatoren (TIC) parallel den zweiten Eingängen der Korrelatorstufen (K1, K2 ... KN) zugeführt wird,

   - dass in jeder Korrelatorstufe (K1, K2 ... KN) die jeweilige Folge digitaler Werte (I(k), Q(K) mit dem zugeordnet verzögerten Referenzcode (R(k)) durch Multiplizieren korreliert wird, und dass die Ergebnisse akkumuliert und in einem Speicher (19) zwischengespeichert werden, und
- dass gesteuert durch jeweils ein Steuersignal (RE1, REN) die in den Speichern (19) gespeicherten, über die Länge des Referenzcodes akkumulierten Ergebnisse als jeweilige Korrelationswerte (C1(m), C2(m) ... CN(m)) einem digitalen Signalprozessor (15) zur Auswertung und Weiterverarbeitung zugeführt werden.

2. Verfahren nach Anspruch 1,
dadurch gekennzeichnet,
dass die Auswertung und Weiterverarbeitung der Korrrelationswerte (C1(m), C2(m) ... CN(m)) mit Hilfe eines Scanning-Algorithmus und wiederholten Verschiebungen erfolgt, wobei die Maxima der Impulsantwort für das Empfangssignal (P1, Px) ermittelt werden.

3. Verfahren nach Anspruch 2,
dadurch gekennzeichnet,
dass nachfolgend auf die Ermittlung der Maxima der Impulsantwort nur noch diejenigen Korrelationswerte (C1(m), C2(m) ... CN(m)) dem Signalprozessor (15) zugeführt werden, die diesen Maxima entsprechen.

4. Verfahren nach Anspruch 1,
dadurch gekennzeichnet,
dass die Auswertung und Weiterverarbeitung der Korrelationswerte (C1(m), C2(m) ... CN(m)) in einer Grobsynchronisation zwischen dem Empfangssignal (P1, Px) und dem Referenzcode (R(k)) besteht, wobei der Referenzcode (R(k)) sukzessive um konstante Verzögerungen verschoben wird.

5. Verfahren nach Anspruch 4,
dadurch gekennzeichnet,
dass bei jedem Verfahrensschritt die zugehörige Empfangsenergie berechnet und das Energiemaximum ermittelt wird, und dass der Generator (14) so gesteuert wird, dass das Energiemaximum in der Mitte des durch den Korrelator (TIC) abgedeckbaren Empfangsfensters liegt.

6. Verfahren nach Anspruch 1,
dadurch gekennzeichnet,
dass die Auswertung und Weiterverarbeitung der Korrelationswerte (C1(m), C2(m) ... CN(m)) darin besteht, dass diese Korrelationswerte die Komponenten eines Empfangsvektors (d(m)) in der komplexen Ebene (I/Q) bilden, dass aus mehreren aufeinanderfolgenden Empfangsvektoren ein Einheitsvektor gebildet und jeder Empfangsvektor mit dem konjugiert Komplexen des Einheitsvektors multipliziert wird, und dass aus dem Vorzeichen dieses Produkts ein jeweiliges Bit der Daten bestimmt wird.

7. Verfahren nach Anspruch 6,
dadurch gekennzeichnet,
dass der Einheitsvektor durch Mittelung gebildet wird, und dass vor dieser Mittelung eine Kompensation der durch Frequenzabweichungen zwischen Empfangs- und Lokaloszillatorfrequenz hervorgerufenen Phasendrehung (Phi) des Empfangsvektors (d(m)) erfolgt.

8. Digitaler Empfänger für Bandspreizsignale, die durch Multiplikation eines nachrichtentragenden Signals mit einer Hilfsfunktion erzeugt sind,
mit einem Empfangskonverter (1), in dem aus dem gefilterten Empfangssignal (P1, Px) ein Zwischenfrequenzsignal (ZF) gewonnen wird,
mit einem I/Q-Prozessor (2), in welchem das Zwischenfrequenzsignal mit einem Cosinus- und einem Sinussignal aus einem Lokaloszillator (10) multipliziert wird, und in welchem die hierbei resultierenden Signale (I(t), Q(t)) durch Analog-Digitalwandler (13, 13') in digitale Werte (I(k), Q(k)) umgewandelt werden, und mit einer Digitalstufe (3), in welcher mit Hilfe von digitalen Korrelatoren (TIC) und zugeordneten Schaltungen aus den digitalen Werten (I(k), Q(k)) ein Ausgangssignal gewonnen wird, das die Daten des nachrichtentragenden Signals bildet, dadurch gekennzeichnet,
- dass die Digitalstufe (3) einen Referenzcode-Generator (14), einen digitalen Signalprozessor (15) und zwei gleiche Korrelatoren (TIC) mit jeweils einer digitalen Verzögerungsleitung (17), einer Mehrzahl (N) von Korrelatorstufen (K1, K2 ... KN) und einer Steuerlogik (16) umfasst,
- dass der Referenzcode-Generator (14) ausgebildet ist zum Abgeben eines binären Referenzcodes (R(k)), eines Synchronisiersignals (SY) und eines Taktes (fs) an die Verzögerungsleitungen (17) beider Korrelatoren (TIC),

EP 0 448 665 B1

- dass der Signalprozessor (15) ausgebildet ist zum Abgeben von Regelsignalen (PD) an die Steuerlogiken (16) und den Referenzcode-Generator (14), und zum Ausgeben der Daten des nachrichtentragenden Signals,
- dass die Korrelatorstufen (K1, K2 ... KN) der Korrelatoren (TIC) über ihre ersten Eingänge einzeln mit jeweils einer zugeordneten Verzögerungsstufe der jeweiligen Verzögerungsleitung (17) und über ihre zweiten Eingänge gemeinsam mit dem Ausgang des zugeordneten Analog-Digitalwandlers (13, 13′) verbunden sind, und dass die Korrelatorstufen (K1, K2 ... KN) ausgebildet sind zum Korrelieren der Signale an ihren ersten und zweiten Eingängen, zum Zeit-integrieren der Korrelationsergebnisse und zum durch die Steuerlogik (16) gesteuerten Abgeben der jeweiligen Korrelationswerte (C1(m), C2(m) ... CN(m) an den Signalprozessor (15).

9. Empfänger nach Anspruch 8,
dadurch gekennzeichnet,
dass jede Korrelatorstufe (K1, K2 ... KN) einen Akkumulator (18) und einen Resultatspeicher (19) zum Speichern der Korrelationswerte (C1(m), C2(m) ... CN(m)) aufweist.

10. Empfänger nach Anspruch 8,
dadurch gekennzeichnet,
dass die Anzahl (N) der Korrelatorstufen (K1, K2 ... KN) gleich ist der Anzahl Verzögerungsstufen der Verzögerungsleitung (17).

11. Empfänger nach Anspruch 8,
dadurch gekennzeichnet,
dass die Anzahl (N) der Korrelatorstufen (K1, K2 ... KN) geringer ist als die Anzahl Verzögerungsstufen der Verzögerungsleitung (17), wobei die Korrelatorstufen (K1, K2 ... KN) mit ihren Eingängen mit denjenigen der Verzögerungsstufen verbunden sind, die aus der Gesamtheit der Verzögerungsstufen frei wählbar sind.

12. Empfänger nach Anspruch 8,
dadurch gekennzeichnet,
dass durch die Steuerlogik (16) gesteuerte Auswahlschaltungen (20) vorgesehen sind, die zwischen den Verzögerungsstufen der Verzögerungsleitung (17) und den Korrelatorstufen (K1, K2 ... KN) angeordnet sind.

**Claims**

1. A method for determining data of band-spread signals which are produced by multiplication of a message-bearing signal with a help function, whereby an intermediate frequency signal (ZF) is gained from a filtered received signal (P1, Px) with a receive converter (1),
whereby two sequences of digital values (I(k), Q(k)) are formed by an I/Q processor (2) from the intermediate frequency signal (ZF) and a locally produced cosine and sine signal by multiplication and subsequent digitalization, and
whereby the said data are obtained by a digital stage (3) by correlation and further processes from the sequences of the digital values (I(k), Q(k)),characterized in
- that a reference code (R(k)) is produced by a generator (14), delayed step-by-step in two correlators (TIC) by pertinent delay lines (17) and supplied after each delay step to the first input of another one of several correlator stages (K1, K2, .....KN) operated in parallel,
- that every sequence of digital values (I(k), Q(k)) is supplied in one of the two correlators (TIC) parallel to the second inputs of the correlator stages (K1, K2, .... KN),
- that in every correlator stage (K1, K2, ... KN) the respective sequence of digital values (I(k), Q(k)) is correlated by multiplication with the allocated delayed reference code (R(k)), and that the results are accumulated and intermediately stored in a memory (19), and
- that controlled by one control signal (RE1, REN) respectively the results stored in the memories (19) and accumulated over the length of the reference code are supplied as the respective correlation values (C1(m) .... CN(m)) to a digital signal processor (15) for evaluation and further processing.

2. A method as claimed in claim 1, characterized in that the evaluation and further processing of the corre-

8

lation values (C1(m), C2(m), .... CN(m)) is made with the help of a scanning algorithm and repeated displacements, with the maximum values of the impulse response being determined for the received signal (P1, Px).

3. A method as claimed in claim 2, characterized in that following the determination of the maximum values of the impulse response, only those correlation values (C1(m), C2(m) .... CN(m)) are supplied to the signal processor (15) which correspond to these maximum values.

4. A method as claimed in claim 1, characterized in that the evaluation and the further processing of the correlation values (C1(m), C2(m) .... CN(m)) consist of a rough synchronization between the received signal (P1, Px) and the reference code (R(k)), with the reference code being displaced successively by constant delays.

5. A method as claimed in claim 4, characterized in that the associated received energy is calculated in each process step and the energy maximum is determined, and that the generator (14) is controlled in such a way that the energy maximum is situated in the centre of the receive window which is coverable by the correlator (TIC).

6. A method as claimed in claim 1, characterized in that the evaluation and further processing of the correlation values (C1(m), C2(m) .... CN(m)) consist of that said correlation values form the components of a receive vector (d(m)) in the complex plane (I/Q), that a receive vector is formed from several successive receive vectors and that every receive vector is multiplied with the conjugated complex of the unit vector, and that a respective bit of the data is determined from the sign of this product.

7. A method as claimed in claim 6, characterized in that the unit vector is formed by taking the mean, and that prior to taking the mean a compensation of the phase shift (Phi) of the receive vector (d(m)) caused by frequency deviations between received and local oscillator frequency occurs.

8. A digital receiver for band-spread signals which are produced by the multiplication of a message-bearing signal with a help function, with a receive converter (1) in which an intermediate frequency signal (ZF) is gained from the filtered received signal (P1, Px), with an I/Q processor (2) in which the intermediate frequency signal is multiplied with a cosine and a sine signal from a local oscillator (10) and in which the signals (I(t), Q(t)) resulting therefrom are converted by an analog-to-digital converter (13, 13') into digital values (I(k), Q(k)), and with a digital stage (3) in which an output signal can be gained from the digital values (I(k), Q(k)) with the help of digital correlators (TIC) and associated circuits, which signal forms the data of the message-bearing signal, characterized in
- that the digital stage (3) comprises a reference code generator (14), a digital signal processor (15) and two similar correlators (TIC) with a digital delay line (17) each, a plurality (N) of correlator stages (K1, K2 .... KN) and a control logic (16);
- that the reference code generator (14) is arranged so as to issue a binary reference code (R(k)), a synchronization signal (SY) and a cycle (fs) to the delay lines (17) of the two correlators (TIC);
- that the signal processor (15) is arranged so as to issue control signals (PD) to the control logics (16) and the reference code generator (14) and to output the data of the message-bearing signal;
- that the correlator stages (K1, K2 ... KN) of the correlators (TIC) are connected via their first inputs individually with one associated delay stage of the respective delay line (17) and via their second inputs jointly to the output of the associated analog-to-digital converter (13, 13') and that the correlator stages (K1, K2 ... KN) are arranged so as to correlate the signals at their first and second inputs, to time integrate the correlation results and to issue through control of the control logic (16) the respective correlation values (C1(m), C2(m) .... CN(m)) to the signal processor (15).

9. A receiver as claimed in claim 8, characterized in that every correlator stage (K1, K2 ... KN) is provided with an accumulator (18) and a result memory (19) for storing the correlation values (C1(m), C2(m) ... CN(m)).

10. A receiver as claimed in claim 8, characterized in that the number (N) of correlator stages (K1, K2 ... KN) is equivalent to the number of delay stages of the delay lines (17).

11. A receiver as claimed in claim 8, characterized in that the number (N) of correlator stages (K1, K2 ... KN) is smaller than the number of delay stages of the delay line (17), whereby the correlator stages (K1, K2 ...

KN) are connected with their inputs to those of the delay stages which are freely selectable from the entirety of the delay stages.

**12.** A receiver as claimed in claim 8, characterized in that selector circuits (20) are provided which are controlled by the control logic (16) and are disposed between the delay stages of the delay line (17) and the correlator stages (K1, K2 ... KN).


**Revendications**

**1.** Procédé pour détecter les données de signaux d'étalement de bande, qui sont produites par la multiplication d'un signal support d'informations par une fonction secondaire, selon lequel un signal de fréquence intermédiaire (ZF) est extrait d'un signal de réception filtré (P1, Px) au moyen d'un convertisseur récepteur (1), on forme deux suites de valeurs numériques (I(k), Q(k)) à partir du signal de fréquence intermédiaire (ZF) et d'un signal sinusoïdal et cosinusoïdal produit localement, par une multiplication suivie d'une numérisation et au moyen d'un processeur (2) en phase et en quadrature, et on extrait les données mentionnées des suites de valeurs numériques (I(k), Q(k)) par un processus de corrélation et d'autres processus au moyen d'un étage numérique (3), **caractérisé en ce qu'**
- un code de référence (R(k)) est produit par un générateur (14), retardé pas à pas dans deux corrélateurs (TIC) au moyen de circuits de retard (17) associés et amené, après chaque pas de retardement, à la première entrée d'un autre étage de corrélateur situé parmi plusieurs étages de corrélateur fonctionnant en parallèle (K1, K2 ... KN),
- chaque suite de valeurs numériques (I(k), Q(k)) est amenée dans un des deux corrélateurs (TIC) parallèlement aux secondes entrées des étages de corrélateur (K1, K2 ... KN),
- dans chaque étage de corrélateur (K1, K2 ... KN), la suite respective de données numériques (I(k), Q(k)) est corrélée par multiplication au code de référence (R(k)) retardé de manière correspondante et les résultats obtenus sont accumulés et stockés provisoirement dans une mémoire (19), et
- les résultats, accumulés sur la longueur du code de référence et stockés dans les mémoires (19), sont commandés par un signal de commande respectif (RE1, REN) et amenés comme valeurs de corrélation respectives (C1(m), C2(m) ... CN(m)) à un processeur de signaux (15) pour y être exploités et retraités.

**2.** Procédé selon la revendication 1, **caractérisé en ce que** l'exploitation et le retraitement des valeurs de corrélation (C1(m), c2(m) ... CN(m)) sont effectués au moyen d'un algorithme de scanning et de décalages répétés, les maxima de réponses impulsionnelles étant calculés pour le signal de réception (P1, Px).

**3.** Procédé selon la revendication 2, **caractérisé en ce qu'**après le calcul des maxima des réponses impulsionnelles, seules les valeurs de corrélation (C1(m), C2(m) ... CN(m)) correspondant à ces maxima, sont amenées au processeur de signaux (15).

**4.** Procédé selon la revendication 1, **caractérisé en ce que** l'exploitation et le retraitement des valeurs de corrélation (C1(m), C2(m) ... CN(m)) consistent en une synchronisation approximative entre le signal de réception (P1, Px) et le code de référence (R(k)), le code de référence (R(k)) étant successivement décalé de retards constants.

**5.** Procédé selon la revendication 4, **caractérisé en ce qu'**on évalue l'énergie de réception associée et qu'on calcule le maximum énergétique pour chaque pas de la procédure et **en ce que** le générateur (14) est commandé de manière à ce que le maximum énergétique se trouve au milieu de la fenêtre de réception pouvant être masquée par le corrélateur (TIC).

**6.** Procédé selon la revendication 1, **caractérisé en ce que** l'exploitation et le retraitement des valeurs de corrélation (C1(m), C2(m) ... CN(m)) consiste en ce que ces valeurs de corrélation forment les composantes d'un vecteur de réception (d(m)) dans un plan complexe (en phase et en quadrature), en ce qu'on forme un vecteur égal à l'unité à partir de plusieurs vecteurs de réception se succédant et qu'on multiplie chaque vecteur de réception avec le conjugué complexe du vecteur égal à l'unité et en ce qu'on détermine un bit des données respectif à partir du signe de ce produit.

**7.** Procédé selon la revendication 6, **caractérisé en ce que** le vecteur égal à l'unité est formé par moyennage et **en ce qu'**on effectue, avant ce moyennage, une compensation de la rotation de phase (Phi) du vecteur

10

de réception (d(m)) provoquée par les écarts de fréquence entre fréquence de réception et fréquence oscillatoire locale.

8. Récepteur numérique pour signaux d'écartement de bande, lesquels sont produits par la multiplication d'un signal support d'informations avec une fonction secondaire, avec un convertisseur récepteur (1), dans lequel on extrait un signal de fréquence intermédiaire (ZF) à partir d'un signal de réception (P1, Px), avec un processeur en phase et en quadrature (2), dans lequel le signal de fréquence intermédiaire est multiplié avec un signal cosinusoïdal et un signal sinusoïdal provenant d'un oscillateur local (10) et dans lequel les signaux résultants (I(t), Q(t)) sont convertis en valeurs numériques (I(k), Q(k)) par un convertisseur analogique/numérique (13, 13') et avec un étage numérique (3), dans lequel on extrait un signal de sortie à partir des valeurs numériques (I(k), Q(k)), à l'aide des corrélateurs numériques (TIC) et des circuits associés, **caractérisé en ce que**
   - l'étage numérique (3) comprend un générateur de code de référence (14), un processeur numérique de signaux (15) et deux corrélateurs semblables (TIC) avec un circuit numérique de retard respectif (17), une pluralité (N) d'étages de corrélateur (K1, K2 ... KN) et une logique de commande (16),
   - le générateur de code de référence (14) est formé pour délivrer un code de référence (R(k)) binaire, un signal synchro (SY) et une impulsion d'horloge (fs) aux circuits de retard (17) des deux corrélateurs (TIC),
   - le processeur de signaux (15) est formé pour délivrer des signaux de régulation (PD) aux logiques de commande (16) et au générateur de code de référence (14) et pour sortir en output les données du signal support d'informations,
   - les étages de corrélateur (K1, K2 ... KN) des corrélateurs (TIC) sont reliés individuellement avec un étage de retard correspondant du circuit de retard (17) correspondant par le biais de leurs premières entrées, et reliés en commun avec la sortie du convertisseur analogique/numérique (13, 13') correspondant par le biais de leurs secondes entrées, les étages de corrélateur (K1, K2 ... KN) sont formés pour corréler les signaux à leurs premières et secondes entrées, pour intégrer dans le temps les résultats de corrélation et pour délivrer, de manière commandée par la logique de commande (16), les valeurs de corrélation (C1(m), C2(m) . . . CN(m)) respectives au processeur de signaux (15).

9. Récepteur selon la revendication 8, **caractérisé en ce que** chaque étage de corrélation (K1, K2 ... KN) est pourvu d'un accumulateur (18) et d'une mémoire de résultats (19) pour le stockage des valeurs de corrélation (C1(m), C2(m) ... CN(m)).

10. Récepteur selon la revendication 8, **caractérisé en ce que** le nombre (N) d'étages de corrélateur (K1, K2 ... KN) est égal au nombre d'étages de retard du circuit de retard (17).

11. Récepteur selon la revendication 8, **caractérisé en ce que** le nombre (N) d'étages de corrélateur (K1, K2 ... KN) est inférieur au nombre d'étages de retard du circuit de retard (17), les étages de corrélateur (K1, K2.... KN) étant reliés avec leurs entrées aux étages de retard , qui sont librement sélectionnables parmi la totalité des étages de retard.

12. Récepteur selon la revendication 8, **caractérisé en ce qu'**on prévoit des circuits de sélection (20) commandés par la logique de commande (16), ces circuits étant placés entre les étages de retard du circuit de retard (17) et les étages de corrélateur (K1, K2 ...KN).

FIG. 1

FIG. 2

D.Td

S.Td

FIG. 3a

D.Td

N1 N2 N3 N4

FIG. 3b

Q

CQ(m)

d(m)

Phi

CI(m)

I

FIG. 4a

Q

d(m+2)

d(m+1)

Psi

Psi

d(m)

Phi

I

FIG. 4b